# EUROPEAN PATENT SPECIFICATION

(11) **EP 4 189 937 B1**
(45) Date of publication and mention of the grant of the patent: **21.01.2026**
(21) Application number: 21815787.3
(22) Date of filing: 02.11.2021
(51) Int. Cl.: H04L 45/12, H04L 45/24, H04L 47/125, H04L 67/101, H04L 43/08, H04L 41/342, H04L 41/5019, H04L 41/40, H04L 43/20, H04L 45/645

(54) **NETWORK-AWARE LOAD BALANCING**
NETZWERKBEWUSSTER LASTAUSGLEICH
ÉQUILIBRAGE DE CHARGE SENSIBLE AU RÉSEAU

(30) Priority: 18.01.2021 IN 202141002309; 18.01.2021 IN 202141002321
(43) Date of publication of application: 07.06.2023
(73) Proprietor: VeloCloud Networks, LLC, Santa Clara, CA 95054 (US)
(72) Inventor: RAMASWAMY, Navaneeth Krishnan, Chennai, Tamil Nadu 600006 (IN); KUMAR, Gopa, Milpitas, CA 95035 (US)
(74) Representative: Dilg, Haeusler, Schindelmann Patentanwaltsgesellschaft mbH
(86) International application number: PCT/US2021/057794
(87) International publication number: WO 2022/154850

(56) References cited:
- CN-A- 106 656 847
- CN-A- 111 198 764
- US-A1- 2015 358 236
- US-A1- 2018 367 445
- US-A1- 2018 375 744
- US-A1- 2020 195 557

## Description

In recent years, several companies have brought to market solutions for deploying software-defined (SD) wide-area networks (WANs) for enterprises. Some such SD-WAN solutions use external third-party private or public cloud datacenters (clouds) to define different virtual WANs for different enterprises. These solutions typically have edge forwarding elements (called edge devices) at SD-WAN sites of an enterprise that connect with one or more gateway forwarding elements (called gateway devices or gateways) that are deployed in the third-party clouds.

In such a deployment, an edge device connects through one or more secure connections with a gateway, with these connections traversing one or more network links that connect the edge device with an external network. Examples of such network links include MPLS links, SG LTE links, commercial broadband Internet links (e.g., cable modem links or fiber optic links), etc. The SD-WAN sites include branch offices (called branches) of the enterprise, and these offices are often spread across several different geographic locations with network links to the gateways of various different network connectivity types. Accordingly, load balancing in these deployments is often based on geo-proximity or measures of load on a set of load balanced destination machines. However, network links often exhibit varying network path characteristics with respect to packet loss, latency, jitter, etc., that can affect a quality of service or quality of experience. Such multisite load balancing in SD-WAN implementation needs to be reliable and resilient.
US 2015/358236 A1 describes an adaptive load balancer that intelligently steers data traffic through a software defined network (SDN) to which the load balancer is operatively coupled. The network has egress ports to which a plurality of servers is connected. The network has an SDN controller which generates statistical information concerning the network. The adaptive load balancer includes a weighted round robin scheduler module which receives client requests and, based on the statistical information generated by the SDN controller, determines a weight to be attributed to each server of the plurality of servers connected to the network. The adaptive load balancer operates in a passive port mode, a passive path mode, an active path mode and an active path with quality of service (QoS) overlay mode.
CN 106 656 847 B describes an SDN load balancing method with highest network utility. The method comprises the steps of determining that multiple paths between a source node and a destination node are available; assigning different weights to impact factors meeting service quality according to different data flow service attributes; then collecting information of a switch to acquire values of impact factors of service quality in the network, wherein the information comprises link use ratio, time delay and packet loss rate; calculating a utility value and a load of each path in a path set; and finally, selecting an optimal path for the data flow according to overall consideration. Through adoption of the SDN load balancing method with highest network utility, network dynamic load is balanced, further, the service quality demands are met to the greatest extent.

### BRIEF SUMMARY

The present invention provides a method as set forth in independent claim 1, an electronic device as set forth in independent claim 13, and a system as set forth in independent claim 14. More specifically, as set forth in claim 1, the invention provides a method for network-aware load balancing for data messages traversing a software-defined wide-area network (SD-WAN) (e.g., a virtual network) including multiple connection links (e.g., tunnels) between different elements of the SD-WAN (e.g., edge node forwarding elements, hubs, gateways, etc.). The method receives, at a load balancer in a multi-machine site of the SD-WAN, link state data relating to a set of SD-WAN datapaths including connection links of the multiple connection links. The load balancer, in some embodiments, uses the received link state to provide load balancing for data messages sent from a source machine in the multi-machine site to a set of destination machines (e.g., web servers, database servers, etc.) connected to the load balancer through the set of SD-WAN datapaths.

The load balancer receives a data message sent by the source machine in the multi-machine site to a destination machine in the set of destination machines. The load balancer selects, for the data message, a particular destination machine (e.g., a frontend machine for a set of backend servers) in the set of destination machines by performing a load balancing operation based on the received link state data. The data message is then forwarded to the selected particular destination machine in the set of destination machines. In addition to selecting the particular destination machine, in some embodiments, a particular datapath is selected to reach the particular destination machine based on the link state data.

In some embodiments, a controller cluster of the SD-WAN receives data regarding link characteristics from a set of elements (e.g., forwarding elements such as edge nodes, hubs, gateways, etc.) of the SD-WAN connected by the plurality of connection links. The SD-WAN controller cluster generates link state data relating to the plurality of connection links based on the received data regarding connection link characteristics. The generated link state data is then provided to the load balancer of the SD-WAN multi-machine site for the load balancer to use in making load balancing decisions.

In some embodiments, the controller cluster provides the link state data to SD-WAN elements, which in turn provide the link state data to their associated load balancers. These SD-WAN elements in some embodiments include SD-WAN devices that are collocated with the load balancers at the SD-WAN multi-machine sites. In other embodiments, the controller cluster provides the link state data directly to the load balancers at multi-machine sites, such as branch sites, datacenter sites, etc.

In some embodiments, the link state data is a set of criteria used to make load balancing decisions (e.g., a set of criteria specified by a load balancing policy). In other embodiments, the load balancer uses the link state data (e.g., statistics regarding aggregated load on each link) to derive a set of criteria used to make load balancing decisions. The set of criteria, in some embodiments, is a set of weights used in the load balancing process. In other embodiments, the link state data includes the following attributes of a connection link: packet loss, latency, signal jitter, a quality of experience (QoE) score, etc., that are included in the set of criteria used to make the load balancing decision or are used to derive the set of criteria (e.g., used to derive a weight used as a criteria).

In some embodiments, the load balancer also uses other load balancing criteria received from the destination machines or tracked at the load balancer, such as a CPU load, a memory load, a session load, etc. of the destination machine (or a set of backend servers for which the destination machine is a frontend). The link state data and the other load balancing criteria, in some embodiments, are used to generate a single weight for each destination machine. In other embodiments, the other load balancing criteria are used to calculate a first set of weights for each destination machine while the link state data is used to calculate a second set of weights for a set of datapaths to the set of destination machines.

In some embodiments, the link state data is generated for each connection link between elements of the SD-WAN, while in other embodiments the link state data is generated for each of a set of datapaths that are defined by a specific set of connection links used to traverse the SD-WAN elements connecting the load balancer and a particular destination machine (e.g., an SD-WAN edge node, frontend for a set of backend nodes, etc.) at a multi-machine site (e.g., private cloud datacenter, public cloud datacenter, software as a service (SaaS) public cloud, enterprise datacenter, branch office, etc.). In yet other embodiments, the link state data is generated for collections of datapaths connecting the load balancer and a particular data machine in the set of data machines. When the generated link state data relates to individual connection links, the load balancer, in some embodiments, derives the load balancing criteria for each datapath based on the link state data related to the individual connection links.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, the Detailed Description, the Drawings, and the Claims is needed. Moreover, the claimed subject matters are not to be limited by the illustrative details in the Summary, the Detailed Description, and the Drawings.

### BRIEF DESCRIPTION OF THE DRAWINGS

The novel features of the invention are set forth in the appended claims. However, for purposes of explanation, several embodiments of the invention are set forth in the following figures.
**Figure 1** illustrates an example of a virtual network that is created for a particular entity using a hub that is deployed in a public cloud datacenter of a public cloud provider.
**Figure 2** illustrates a first multi-machine site hosting a set of machines that connect to a set of destination machines in a set of multi-machine SD-WAN sites.
**Figure 3** illustrates a network in which a load balancing device receives load attribute data from sets of servers (e.g., destination machines) and a set of SD-WAN attributes (e.g., link state data) from an SD-WAN edge forwarding element based on a set of SD-WAN attributes sent from a set of SD-WAN controllers.
**Figure 4** conceptually illustrates a process for generating link state data and providing the link state data to a load balancer in an SD-WAN.
**Figure 5** conceptually illustrates a process for calculating a set of load balancing criteria based on a set of received link state data and destination machine load attributes.
**Figure 6** conceptually illustrates a process used in some embodiments to provide load balancing for a set of destination machines.
**Figure 7** illustrates a network in which a load balancing device uses a single weight associated with each of a set of destination machines (or datapaths) located at multiple SD-WAN sites to select a destination machine for each received data message.
**Figure 8** illustrates a network in which a load balancing device uses a load weight and a network weight associated with each of a set of destination machines located at multiple SD-WAN sites to select a destination machine for each received data message.
**Figure 9** illustrates a network in which a load balancing device uses a load weight and a network weight associated with each of a set of datapaths to a set of SD-WAN sites to select a particular datapath to a particular SD-WAN site for each received data message.
**Figure 10** illustrates a full mesh network among a set of SD-WAN edge nodes and a set of SD-WAN hubs connected by connection links of different qualities.
**Figure 11** illustrates an embodiment of a GSLB system that can use network-aware load balancing.
**Figure 12** illustrates an embodiment including a network-aware GSLB system deployed in an SD-WAN using network-aware load balancing.
**Figure 13** conceptually illustrates a computer system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments of the invention provide a method for network-aware load balancing for data messages traversing a software-defined wide-area network (SD-WAN) (e.g., a virtual network) including multiple connection links (e.g., tunnels, virtual private networks (VPNs), etc.) between different elements of the SD-WAN (e.g., edge node forwarding elements, hubs, gateways, etc.). The method receives, at a load balancer in a multi-machine site (e.g., a branch office, datacenter, etc.) of the SD-WAN, link state data relating to a set of SD-WAN datapaths, including link state data for the multiple connection links. The load balancer, in some embodiments, uses the provided link state to provide load balancing for data messages sent from a source machine in the multi-machine site to a set of destination machines (e.g., web servers, database servers, containers, pods, virtual machines, compute nodes, etc.) connected to the load balancer through the set of SD-WAN datapaths.

As used in this document, data messages refer to a collection of bits in a particular format sent across a network. One of ordinary skill in the art will recognize that the term data message may be used herein to refer to various formatted collections of bits that may be sent across a network, such as Ethernet frames, IP packets, TCP segments, UDP datagrams, etc. Also, as used in this document, references to L2, L3, L4, and L7 layers (or layer 2, layer 3, layer 4, layer 7) are references, respectively, to the second data link layer, the third network layer, the fourth transport layer, and the seventh application layer of the OSI (Open System Interconnection) layer model.

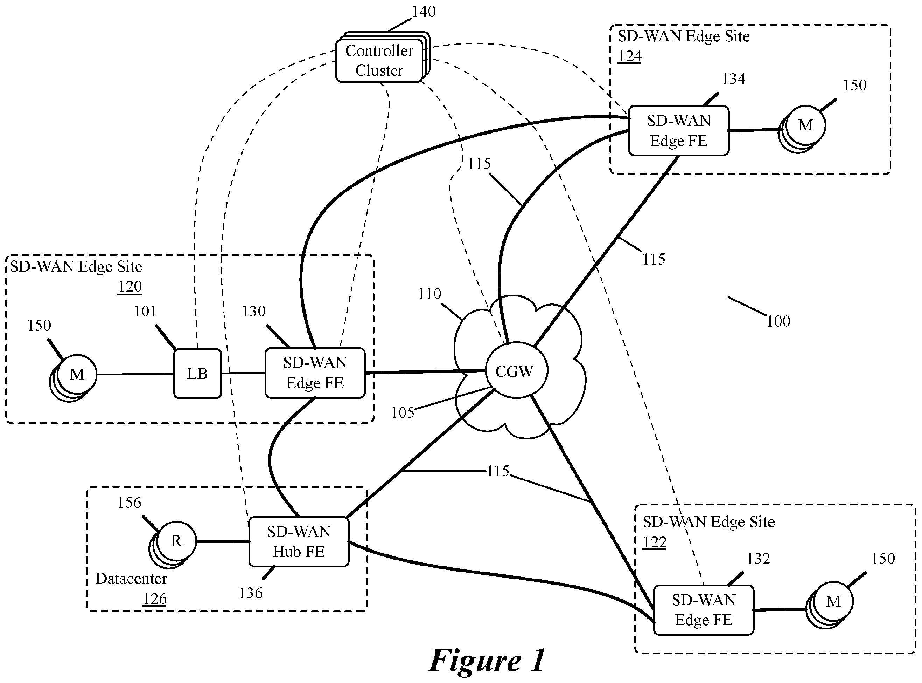

**Figure 1** illustrates an example of a virtual network 100 that is created for a particular entity using SD-WAN forwarding elements deployed at branch sites, datacenters, and public clouds. Examples of public clouds are public clouds provided by Amazon Web Services (AWS), Google Cloud Platform (GCP), Microsoft Azure, etc., while examples of entities include a company (e.g., corporation, partnership, etc.), an organization (e.g., a school, a non-profit, a government entity, etc.), etc.

In **Figure 1****,** the SD-WAN forwarding elements include cloud gateway 105 and SD-WAN forwarding elements 130, 132, 134, 136. The cloud gateway (CGW) in some embodiments is a forwarding element that is in a private or public datacenter 110. The CGW 105 in some embodiments has secure connection links (e.g., tunnels) with edge forwarding elements (e.g., SD-WAN edge forwarding elements (FEs) 130, 132, 134, and 136) at the particular entity's multi-machine sites (e.g., SD-WAN edge sites 120, 122, and 124 with multiple machines 150), such as branch offices, datacenters, etc. These multi-machine sites are often at different physical locations (e.g., different buildings, different cities, different states, etc.) and are referred to below as multi-machine sites or nodes.

Four multi-machine sites 120-126 are illustrated in **Figure 1****,** with three of them being branch sites 120-124, and one being a datacenter 126. Each branch site is shown to include an edge forwarding node 130-134, while the datacenter site 126 is shown to include a hub forwarding node 136. The datacenter SD-WAN forwarding node 136 is referred to as a hub node because in some embodiments this forwarding node can be used to connect to other edge forwarding nodes of the branch sites 120-124. The hub node in some embodiments provides services (e.g., middlebox services) for packets that it forwards from one site to another branch site. The hub node also provides access to the datacenter resources 156, as further described below.

Each edge forwarding element (e.g., SD-WAN edge FEs 130-134) exchanges data messages with one or more cloud gateways 105 through one or more connection links 115 (e.g., multiple connection links available at the edge forwarding element). In some embodiments, these connection links include secure and unsecure connection links, while in other embodiments they only include secure connection links. As shown by edge node 134 and gateway 105, multiple secure connection links (e.g., multiple secure tunnels that are established over multiple physical links) can be established between one edge node and a gateway.

When multiple such links are defined between an edge node and a gateway, each secure connection link in some embodiments is associated with a different physical network link between the edge node and an external network. For instance, to access external networks, an edge node in some embodiments has one or more commercial broadband Internet links (e.g., a cable modem, a fiber optic link) to access the Internet, an MPLS (multiprotocol label switching) link to access external networks through an MPLS provider's network, a wireless cellular link (e.g., a 5G LTE network). In some embodiments, the different physical links between the edge node 134 and the cloud gateway 105 are the same type of links (e.g., are different MPLS links).

In some embodiments, one edge forwarding node 130-134 can also have multiple direct links 115 (e.g., secure connection links established through multiple physical links) to another edge forwarding node 130-134, and/or to a datacenter hub node 136. Again, the different links in some embodiments can use different types of physical links or the same type of physical links. Also, in some embodiments, a first edge forwarding node of a first branch site can connect to a second edge forwarding node of a second branch site (1) directly through one or more links 115, or (2) through a cloud gateway or datacenter hub to which the first edge forwarding node connects through two or more links 115. Hence, in some embodiments, a first edge forwarding node (e.g., 134) of a first branch site (e.g., 124) can use multiple SD-WAN links 115 to reach a second edge forwarding node (e.g., 130) of a second branch site (e.g., 120), or a hub forwarding node 136 of a datacenter site 126.

The cloud gateway 105 in some embodiments is used to connect two SD-WAN forwarding nodes 130-136 through at least two secure connection links 115 between the gateway 105 and the two forwarding elements at the two SD-WAN sites (e.g., branch sites 120-124 or datacenter site 126). In some embodiments, the cloud gateway 105 also provides network data from one multi-machine site to another multi-machine site (e.g., provides the accessible subnets of one site to another site). Like the cloud gateway 105, the hub forwarding element 136 of the datacenter 126 in some embodiments can be used to connect two SD-WAN forwarding nodes 130-134 of two branch sites through at least two secure connection links 115 between the hub 136 and the two forwarding elements at the two branch sites 120-124.

In some embodiments, each secure connection link between two SD-WAN forwarding nodes (i.e., CGW 105 and edge forwarding nodes 130-136) is formed as a VPN (virtual private network) tunnel between the two forwarding nodes. In this example, the collection of the SD-WAN forwarding nodes (e.g., forwarding elements 130-136 and gateways 105) and the secure connections 115 between the forwarding nodes forms the virtual network 100 for the particular entity that spans at least public or private cloud datacenter 110 to connect the branch and datacenter sites 120-126.

In some embodiments, secure connection links are defined between gateways in different public cloud datacenters to allow paths through the virtual network to traverse from one public cloud datacenter to another, while no such links are defined in other embodiments. Also, in some embodiments, the gateway 105 is a multi-tenant gateway that is used to define other virtual networks for other entities (e.g., other companies, organizations, etc.). Some such embodiments use tenant identifiers to create tunnels between a gateway and edge forwarding element of a particular entity, and then use tunnel identifiers of the created tunnels to allow the gateway to differentiate data message flows that it receives from edge forwarding elements of one entity from data message flows that it receives along other tunnels of other entities. In other embodiments, gateways are single-tenant and are specifically deployed to be used by just one entity.

**Figure 1** illustrates a cluster of controllers 140 that serves as a central point for managing (e.g., defining and modifying) configuration data that is provided to the edge nodes and/or gateways to configure some or all of the operations. In some embodiments, this controller cluster 140 is in one or more public cloud datacenters, while in other embodiments it is in one or more private datacenters. In some embodiments, the controller cluster 140 has a set of manager servers that define and modify the configuration data, and a set of controller servers that distribute the configuration data to the edge forwarding elements (FEs), hubs and/or gateways. In some embodiments, the controller cluster 140 directs edge forwarding elements and hubs to use certain gateways (i.e., assigns a gateway to the edge forwarding elements and hubs). The controller cluster 140 also provides next hop forwarding rules and load balancing criteria in some embodiments.

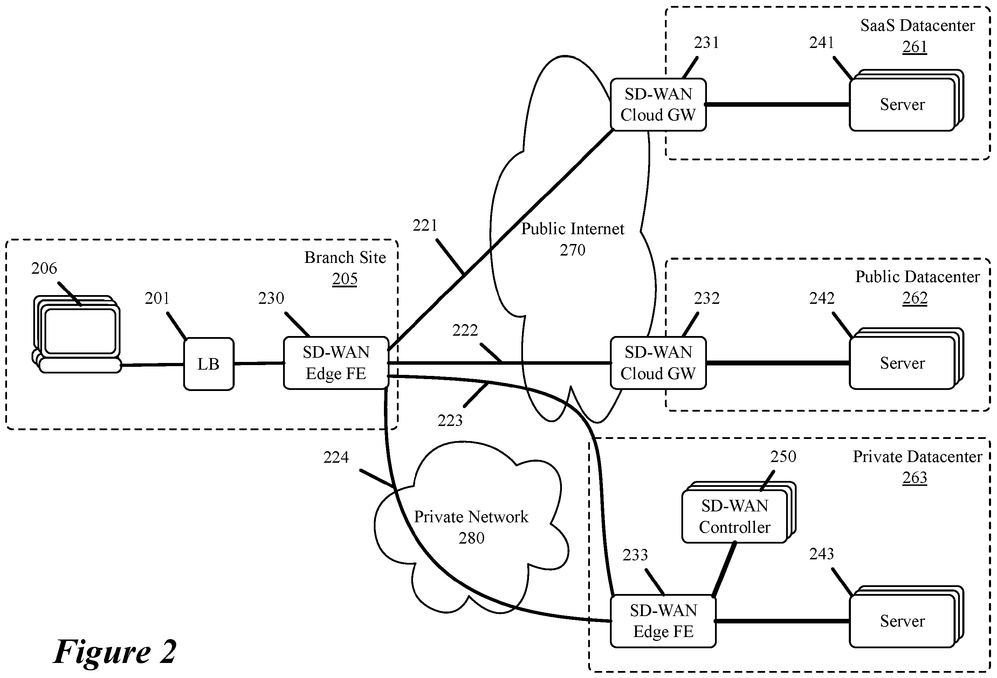

**Figure 2** illustrates a branch multi-machine site 205 hosting a set of machines 206 that connects to a set of destination machines (e.g., servers 241-243) in a set of other multi-machine sites 261-263, which in this example are all datacenters. The connections are made through a load balancer 201, an SD-WAN edge FE 230, and a set of connection links 221-224 to SD-WAN cloud gateways 231-232 and SD-WAN edge FE 233 (collectively, "SD-WAN edge devices"). In some embodiments, SD-WAN cloud gateways 231 and 232 are multi-tenant SD-WAN edge devices deployed at a public cloud datacenter to provide SD-WAN services to software as a service (SaaS), infrastructure as a service (IaaS), and cloud network services as well as access to private backbones.

In some embodiments, the CGW 232 is deployed in the same public datacenter 262 as the servers 242, while in other embodiments it is deployed in another public datacenter. Similarly, in some embodiments, the CGW 231 is deployed in the same public datacenter 261 as the servers 241, while in other embodiments it is deployed in another public datacenter. As illustrated, connection links 221-223 utilize public Internet 270, while connection link 224 utilizes a private network 280 (e.g., an MPLS provider's network). The connection links 221-224, in some embodiments, are secure tunnels (e.g., IPSec tunnels) used to implement a virtual private network.

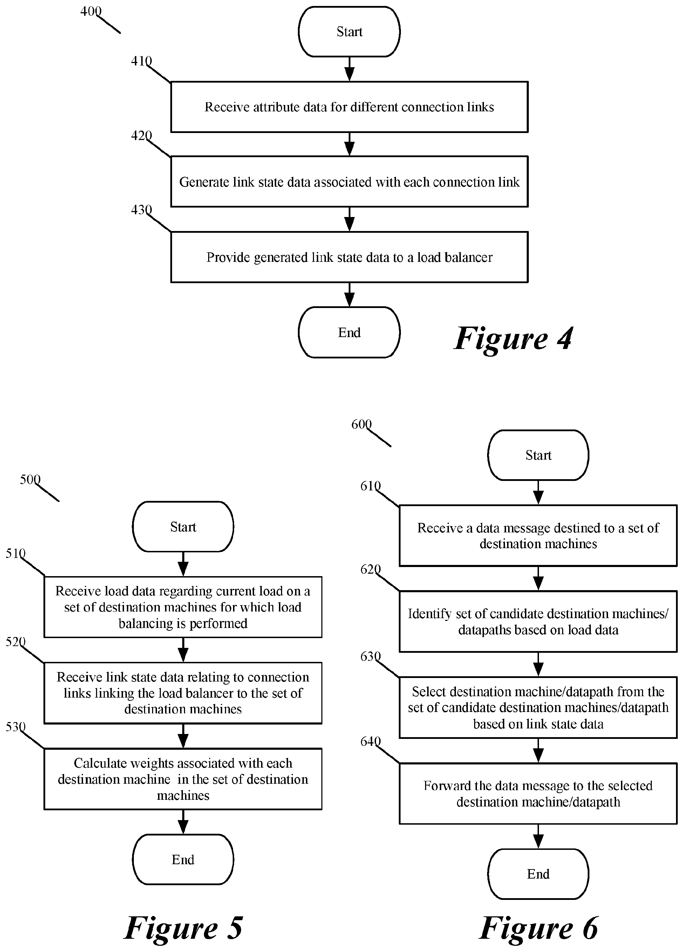

**Figure 2** also illustrates a set of one or more SD-WAN controllers 250 executing at the private datacenter 263. Like controller cluster 140 of **Figure 1****,** the set of SD-WAN controllers 250 manage a particular SD-WAN implemented by connection links 221-224. In some embodiments, the set of SD-WAN controllers 250 receive data regarding link characteristics of connection links (e.g., connection links 221-224) used to implement the SD-WAN from elements (e.g., SD-WAN edge devices 230-233) of the SD-WAN connected by the connection links. The set of SD-WAN controllers 250 generate link state data relating to the connection links based on the received data regarding connection link characteristics. The generated link state data is then provided to the load balancer 201 of the SD-WAN multi-machine site 205 for the load balancer to use in making load balancing decisions. The specific operations at the set of controllers 250 and the load balancer 201 will be explained below in more detail in relation to **Figures 4-6****.**

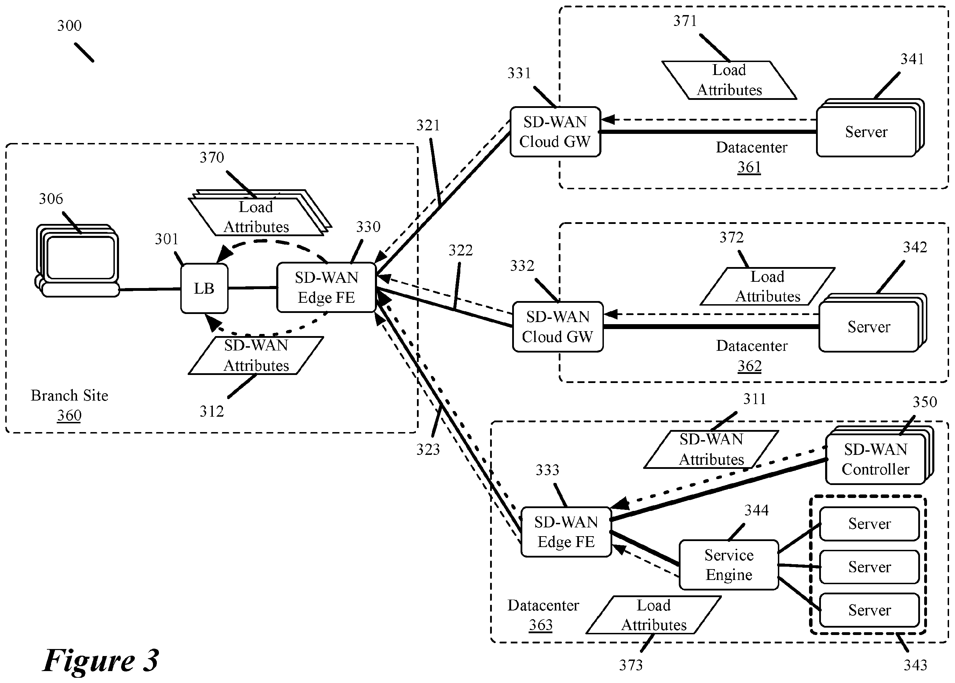

**Figure 3** illustrates a network 300 in which a load balancing device 301 receives (1) load attribute data 370 (e.g., including load attributes 371-373) relating to the load on the sets of servers 341-343 (which are the destination machines in this example) and (2) a set of SD-WAN attributes 312 (e.g., link state data) from SD-WAN edge FE 330 based on a set of SD-WAN attributes 311 sent from a set of SD-WAN controllers 350. In some embodiments, the SD-WAN attributes 311 and 312 are identical, while in other embodiments, the SD-WAN edge FE 330 modifies SD-WAN attributes 311 to generate link state data for consumption by the local load balancer 301.

Load attributes 371-373, in some embodiments, are sent to SD-WAN controller 350 for this controller to aggregate and send to the load balancing device 301. In some embodiments, the SD-WAN controller 350 generates weights and/or other load balancing criteria from the load attributes that it receives. In these embodiments, the controller 350 provides the generated weights and/or other load balancing criteria to the load balancer 301 to use in performing its load balancing operations to distribute the data message load among the SD-WAN datacenter sites 361-363. In other embodiments, the load balancing device 301 generates the weights and/or other load balancing criteria from the load attributes 370 that it receives from non-controller modules and/or devices at datacenter sites 361-363, or receives from the controller 350.

Network 300 includes four edge forwarding elements 330-333 that connect four sites 360-363 through an SD-WAN established by these forwarding elements and the secure connections 321-323 between them. In the illustrated embodiment, the SD-WAN edge devices 331 and 332 serve as frontend load-balancing devices for the backend servers 341 and 342, respectively, and are identified as the destination machines (e.g., by virtual IP addresses associated with their respective sets of servers).

In some embodiments, an SD-WAN edge forwarding element (e.g., SD-WAN edge FE 333) provides a received data message destined for its associated local set of servers (e.g., server set 343) to a local load balancing service engine (e.g., service engine 344) that provides the load balancing service to distribute data messages among the set of servers 343. Each set of servers 341-343 is associated with a set of load balancing weights LW₃₄₁-LW₃₄₃, which represent the collective load on the servers of each server set. The load balancer 301 uses the load balancing weights to determine how to distribute the data message load from a set of machines 306 among the different server sets 341-343.

In addition, the load balancing device for each server set (e.g., the CGW 331 or service engine 344 for the server set 341 or 343) in some embodiments uses another set of load balancing weights (e.g., one that represents the load on the individual servers in the server set) to determine how to distribute the data message load among the servers in the set (e.g., by performing based on the weights in the set a round robin selection of the servers in the set for successive flows, in the embodiments where different weights in the set are associated with different servers).

In different embodiments, the load attributes 371-373 are tracked differently. For instance, in some embodiments, the servers 341-343 track and provide the load attributes. In other embodiments, this data is tracked and provided by load tracking modules that execute on the same host computers as the servers, or that are associated with these computers. In still other embodiments, the load attributes are collected by the load balancing devices and/or modules (e.g., CGW 331 or service engine 344) that receive the data messages forwarded by the load balancer 301 and that distribute these data messages amongst the servers in their associated server set.

**Figure 4** conceptually illustrates a process 400 for generating link state data and providing the link state data to one or more load balancers in an SD-WAN. Process 400, in some embodiments, is performed by an SD-WAN controller or a set of SD-WAN controllers (e.g., SD-WAN controllers 250 or 350). The process 400 begins by receiving (at 410) connection link attribute data from a set of SD-WAN elements (e.g., SD-WAN edge FEs, gateways, hubs, etc.) at one or more multi-machine sites. In some embodiments, the connection link attributes are received based on a request from the set of SD-WAN controllers or a long-pull operation established with each SD-WAN element to be notified of changes to connection link attributes. The connection link attributes, in some embodiments, include at least one of a measure of latency, a measure of loss, a measure of jitter, and a measure of a quality of experience (QoE).

The process 400 then generates (at 420) link state data associated with each connection link associated with the received link state data. The link state data, in some embodiments, is aggregate link state data for a set of connection links connecting a pair of SD-WAN elements (e.g., SD-WAN edge FEs, hubs, and gateways). For example, in some embodiments, an SD-WAN edge FE connects to an SD-WAN gateway using multiple connection links (e.g., a public internet connection link, an MPLS connection link, a wireless cellular link, etc.) that the SD-WAN may use to support a particular communication between a source machine and a destination machine in the set of destination machines (e.g., by using multiple communication links in the aggregate set for a same communication session to reduce the effects of packet loss along either path). Accordingly, the aggregate link state data, in such an embodiment, reflects the characteristics of the set of connection links as it is used by the SD-WAN edge FE to connect to the SD-WAN gateway.

In some embodiments, the link state data includes both current and historical data (e.g., that a particular connection link flaps every 20 minutes, that a particular connection link latency increases during a particular period of the day or week, etc.). In some embodiments, the historical data is incorporated into a QoE measure, while in other embodiments, the historical data is used to provide link state data (e.g., from the SD-WAN edge FE) that reflects patterns in connectivity data over time (e.g., increased latency or jitter during certain hours, etc.).

In some embodiments, the link state data is a set of criteria that includes criteria used by a load balancer to make load balancing decisions. The set of criteria, in some embodiments, includes a set of weights that are used by the load balancer in conjunction with a set of weights based on characteristics of the set of destination machines among which the load balancer balances. In some embodiments, the set of criteria provided as link state data are criteria specified in a load balancing policy. In other embodiments, the link state data is used by the load balancer to generate criteria (e.g., weights) used to perform the load balancing. The use of the link state data in performing the load balancing operation is discussed in more detail in relation to **Figure 5****.**

The generated link state data is then provided (at 430) to one or more load balancers (or set of load balancers) at one or more SD-WAN sites. In some embodiments, the set of SD-WAN controllers provides (at 430) the generated link state data to an SD-WAN element (e.g., a collocated SD-WAN edge FE) that, in turn provides the link state data to the load balancer. The generated link state data provided to a particular load balancer, in some embodiments, includes only link state data that is relevant to a set of connection links used to connect to a set of destination machines among which the load balancer distributes data messages (e.g., excluding "dead-end" connection links from a hub or gateway to an edge node not executing on a destination machine in the set of destination machines).

Process 400 ends after providing (at 430) the generated link state data to one or more load balancers at one or more SD-WAN sites. The process 400 repeats (i.e., is performed periodically or iteratively) based on detected events (e.g., the addition of a load balancer, the addition of an SD-WAN element, a connection link failure, etc.), according to a schedule, or as attribute data is received from SD-WAN elements.

**Figure 5** conceptually illustrates a process 500 for calculating a set of load balancing criteria based on a set of received link state data and destination machine load attributes. Process 500, in some embodiments, is performed by a load balancer (e.g., load balancer 301) at an SD-WAN site. In other embodiments, this process is performed by a server or controller associated with this load balancer (e.g., load balancer 301). In some embodiments, this server or controller executes on the same device (e.g., same computer) as the load balancer (e.g., load balancer 301), or executes on a device in the same datacenter as the load balancer (e.g., load balancer 301).

Process 500 begins by receiving (at 510) load data regarding a current load on a set of candidate destination machines (e.g., a set of servers associated with a virtual IP (VIP) address) from which the load balancer selects a destination for a particular data message flow. The load data, in some embodiments, includes information relating to a CPU load, a memory load, a session load, etc., for each destination machine in the set of destination machines.

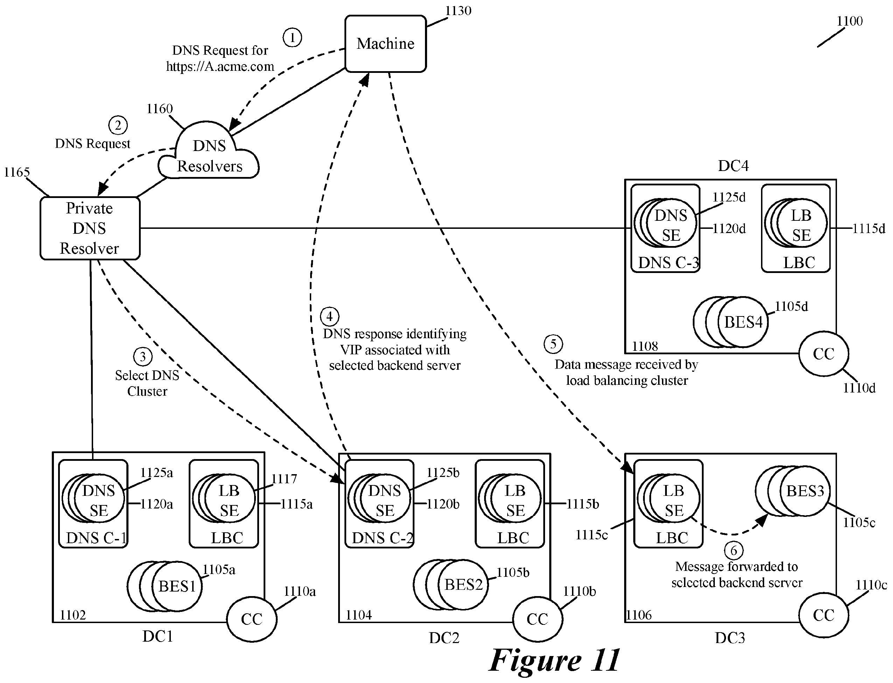

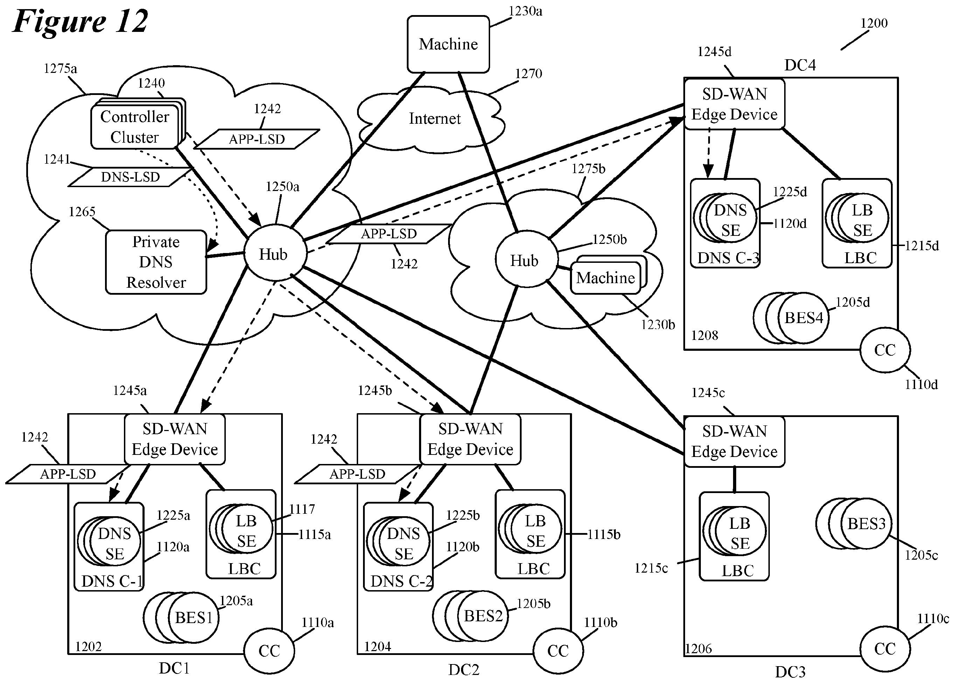

In some embodiments, a load balancer maintains information regarding data message flows distributed to different machines in the set of destination machines, and additional load data is received from other load balancers at the same SD-WAN site or at different SD-WAN sites that distribute data messages among the same set of destination machines. Examples of a distributed load balancer (implemented by a set of load balancing service engines) is provided in **Figures 11** **and** **12****.** Conjunctively or alternatively, load data (or a capacity used to calculate load data) in some embodiments is received from the set of destination machines.

The process 500 also receives (at 520) link state data relating to connection links linking the load balancer to the set of destination machines. As described above, in some embodiments, the link state data is a set of criteria that are specified in a load balancing policy. For example, in some embodiments, a load balancing policy may specify calculating a single weight for each destination machine based on a set of load measurements and a set of connectivity measurements. In other embodiments, a load balancing policy may specify calculating a first load-based weight and a second connectivity-based weight. In either of these embodiments the set of connectivity measurements is, or is based on, the received link state data. The weights, in some embodiments, are used to perform a weighted round robin or other similar weight-based load balancing operation. One of ordinary skill in the art will appreciate that receiving the load data and link state data, in some embodiments, occurs in a different order, or each occurs periodically, or each occurs based on different triggering events (e.g., after a certain number of load balancing decisions made by a related load balancer, upon a connection link failure, etc.).

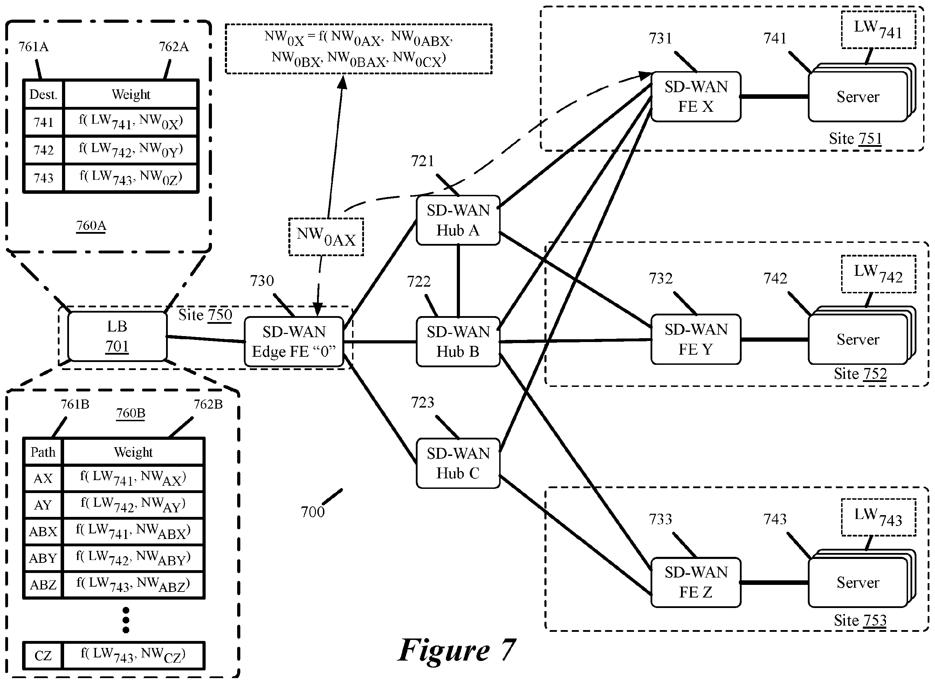

After receiving the load and link state data, the process 500 calculates (at 530) a set of weights for each destination machine. In some embodiments, the set of weights for a particular destination machine includes a first load-based weight and a second connectivity-based weight. An embodiment using two weights is discussed below in relation to **Figure 6****.** In some embodiments, the load data and the link state data are used to generate a single weight associated with each destination machine. In other embodiments, the load balancer uses the link state data to identify multiple possible paths (e.g., datapaths) for reaching a particular destination machine, calculates a weight associated with each datapath based on the load data and the link state data for connection links that make up the path, and treats each path as a potential destination as in table 760B of **Figure 7** discussed below. A load balancer, in some embodiments, then performs a round robin operation based on the calculated weights (e.g., a weighted round robin).

**Figure 6** conceptually illustrates a process 600 used in some embodiments to provide load balancing for a set of destination machines. Process 600 is performed, in some embodiments, by each load balancer in an SD-WAN site that selects particular destination machines from a set of destination machines at another SD-WAN site. In some embodiments, a load balancer operating at a particular edge site performs the load balancing operation before providing a data message to a collocated SD-WAN edge FE at the edge site.

As illustrated in **Figure 3****,** the set of destination machines can be distributed across several sites 361-363, and a load balancer associated with each of these sites can then select one destination machine at each of these sites after the process 600 selects one of these sites. Alternatively, the process 600 in some embodiments selects individual destination machines at some sites, while having a load balancer at another site select individual destination machines at that site. In still other embodiments, the process 600 selects individual destination machines at each other site, rather than having another load balancer associated with each other site select any amongst the destination machines at those sites.

The process 600 begins by receiving (at 610) a data message destined to a set of machines. In some embodiments, the data message is addressed to a VIP that is associated with the set of destination machines or is a request (e.g., a request for content) associated with the set of destination machines. The set of destination machines includes a subset of logically grouped machines (e.g., servers, virtual machines, Pods, etc.) that appear to the load balancer as a single destination machine at a particular location (e.g., SD-WAN site, datacenter, etc.).

The process 600 then identifies (at 620) a set of candidate destination machines or datapaths based on the load data relating to the set of destination machines. In some embodiments, the identified set of candidate destination machines (or datapaths) is based on a weight that relates to a load on the destination machines. For example, in an embodiment that uses a least connection method of load balancing, the set of candidate destination machines is identified as the set of "n" destination machines with the fewest number of active connections. One of ordinary skill in the art will appreciate that the least connection method is one example of a load balancing operation based on selecting a least-loaded destination machine and that other measures of load can be used as described in relation to the least connection method.

In some embodiments, the value of "n" is an integer that is less than the number of destination machines in the set of destination machines. The value of "n" is selected, in some embodiments, to approximate a user-defined or default fraction (e.g., 10%, 25%, 50%, etc.) of the destination machines. Instead of using a fixed number of candidate destination machines, some embodiments identify a set of candidate machines based on a load-based weight being under or over a threshold that can be dynamically adjusted based on the current load-based weights. For example, if the least-loaded destination is measured to have a weight "W_{LL}" (e.g., representing using 20% of its capacity) the candidate destination machines may be identified based on being within a certain fixed percentage (P) of the weight (e.g., W_{LL} < W_{CDM} < W_{LL} + P) or being no more than some fixed factor (A) times the weight of the least-loaded destination machine (e.g., W_{LL} < W_{CDM} < A * W_{LL}), where A is greater than 1. Similarly, if a load-based weight measures excess capacity, a minimum threshold can be calculated by subtraction by P or division by A in the place of the addition and multiplication used to calculate upper thresholds.

In some embodiments, identifying the set of candidate destination machines includes identifying a set of candidate datapaths associated with the set of candidate destination machines. In some such embodiments, a set of datapaths to reach the candidate destination machine is identified for each candidate destination machine. Some embodiments identify only a single candidate destination machine (e.g., identify the least-loaded destination machine) and the set of candidate datapaths includes only the datapaths to the single candidate destination machine.

After identifying (at 620) the set of candidate destination machines or datapaths based on the load data, a destination machine or datapath for the data message is selected (at 630) based on the link state data. In some embodiments, the link state data is a connectivity-based weight calculated by an SD-WAN and provided to the load balancer. In other embodiments, the link state data includes data regarding link characteristics that the load balancer uses to calculate the connectivity-based weight. Selecting the destination machine for a data message, in some embodiments, includes selecting the destination machine associated with a highest (or lowest) connectivity-based weight in the set of candidate destination machines. The connectivity-based weight, in some embodiments, is based on at least one of a measure of latency, a measure of loss, or a measure of jitter. In some embodiments, the connectivity-based weight is based on a QoE measurement based on some combination of connection link attribute data (e.g., if provided by the set of controllers) or link state data for one or more connection links (e.g., a set of connection links between a source edge node and a destination machine, a set of connection links making up a datapath, etc.).

The data message is then forwarded (at 640) to the selected destination machine and, in some embodiments, along the selected datapath. In some embodiments that select a particular datapath, a collocated SD-WAN edge FE provides the load balancer with information used to distinguish between different datapaths. In some embodiments in which the destination machine is selected but the datapath is not, the SD-WAN edge FE performs a connectivity optimization process to use one or more of the connection links that can be used to communicate with the destination machine.

**Figures 7-12** illustrate embodiments implementing network-aware load balancing as described above. **Figure 7** illustrates a network 700 in which a load balancer 701 uses a single weight associated with each of a set of destination machines (e.g., server clusters 741-743 or datapaths) located at multiple SD-WAN sites 751-753 to select a SD-WAN site for each received data message. Network 700 includes four SD-WAN sites 750-753 associated with SD-WAN edge forwarding nodes 730-733. In the illustrated embodiment the SD-WAN FEs 731-733 serve as frontend load balancers for the backend servers 741-743, respectively, and are identified as the destination machines. In other embodiments, the backend servers are directly selected by the load balancer 701.

Each set of servers 741-743 is associated with a set of load balancing weights that are used in some embodiments by the front end load balancing forwarding nodes 731-733 to distribute the data message load across the servers of their associated server sets 741-743. Each server set 741-743 is also associated with a set of load balancing weights LW₇₄₁- LW₇₄₃ that are used by the load balancer 701 to distribute the data message load among the different server sets. In some embodiments, the load balancing weights are derived from the set of load data (e.g., CPU load, memory load, session load, etc.) provided to, or maintained, at the load balancer 701. Also, in some embodiments, the load balancing weights LW₇₄₁- LW₇₄₃ represent the collective load among the servers of each server set, while the load balancing weights used by the forwarding nodes 731-733 represents the load among the individual servers in each server set associated with each forwarding node.

The network 700 also includes a set of SD-WAN hubs 721-723 that facilitate connections between SD-WAN edge forwarding nodes 730-733 in some embodiments. SD-WAN hubs 721-723, in some embodiments, execute in different physical locations (e.g., different datacenters) while in other embodiments some or all of the SD-WAN hubs 721-723 are in a single hub cluster at a particular physical location (e.g., an enterprise datacenter). SD-WAN hubs 721-723, in the illustrated embodiment, provide connections between the SD-WAN edge forwarding nodes 730-733 of the SD-WAN sites. In this example, communications between SD-WAN forwarding nodes have to pass through an SD-WAN hub so that data messages receive services (e.g., firewall, deep packet inspection, other middlebox services, etc.) provided at the datacenter in which the hub is located. In other embodiments (e.g., the embodiments illustrated in **Figures 2****,** **3****, and** **10****),** edge forwarding nodes have direct node-to-node connections, and communication between pairs of such nodes uses these connections and does not pass through any intervening hub or CGW.

The load balancer 701 receives the load balancing data (i.e., load weights LW₇₄₁- LW₇₄₃) and link state data (e.g., network weights (NW)) for the connection links between the SD-WAN elements. The link state data, as described above in relation to **Figures 4 and 5****,** is either a set of network weights or is used to calculate the set of network weights used by the load balancer. The link state data is generated differently in different embodiments. For instance, in some embodiments, it is generated by link-state monitors associated with the edge forwarding nodes 730-733 (e.g., monitors at the same location or executing on the same computers as the forwarding nodes), while in other embodiments, it is generated by the SD-WAN controllers.

**Figure** 7 illustrates two different load balancing embodiments using load balancing information 760A and 760B that include a list of destination machines 761A and 761B, respectively, and a list of weights 762A and 762B, respectively, associated with (1) the list of destination machines, which in this example are server sets 741-743, and (2) the list of paths to the destination machines. As indicated by the function notation in the tables 762A and 762B, the weight in lists 762A and 762B are a function of a load weight and a network weight for a particular destination machine.

Between the edge forwarding element 730 and a destination edge forwarding element associated with a selected server set, there can be multiple paths through multiple links of the edge forwarding element 730 and multiple hubs. For instance, there are three paths between the forwarding elements 730 and 731 through hubs 721-723. If the forwarding element 730 connects to one hub through multiple physical links (e.g., connects to hub 721 through two datapaths using two physical links of the forwarding element 730), then multiple paths would exist between the forwarding elements 730 and 731 through the multiple datapaths (facilitated by the multiple physical links of the forwarding element 730) between the forwarding element 730 and the hub 721.

As mentioned above, the load balancers use different definitions of a destination machine in different embodiments. Load balancing information 760A defines destination machines using the edge nodes 731-733 (representing the sets of servers 741-743) such that a particular edge node (e.g., the edge node 731) is selected. The particular edge node is selected based on a weight that is a function of a load weight (e.g., LW₇₄₁) associated with the edge node and a network weight (e.g., NW_{0X}) associated with a set of datapaths available to reach the edge node. The network weight (e.g., NW_{0X}) in turn is a function of a set of network weights associated with each connection link or set of connection links available to reach the destination machine.

For example, to calculate the network weight NW_{0X}, a load balancer, SD-WAN controller, or SD-WAN edge FE determines all the possible paths to the SD-WAN node 731 and calculates a network weight for each path based on link state data received regarding the connection links that make up the possible paths. Accordingly, NW_{0X} is illustrated as a function of network weights NW_{0AX}, NW_{0ABX}, NW_{0BX}, NW_{0BAX}, and NW_{0CX} calculated for each connection link based on link state data. The link state data for a particular connection link, in some embodiments, reflects not only the characteristics of the intervening network but also reflects the functionality of the endpoints of the connection link (e.g., an endpoint with an overloaded queue may increase the rate of data message loss, jitter, or latency). In some embodiments, the link state data is used directly to calculate the network weight NW_{0X} instead of calculating intermediate network weights.

Load balancing information 760B defines destination machines using the datapaths to edge nodes 731-733 (representing the sets of servers 741-743) such that a particular datapath to a particular edge node is selected. The particular datapath is selected based on a weight (e.g., a destination weight) that is a function of a load weight (e.g., LW₇₄₁) associated with the particular edge node that the datapath connects to the source edge node and a network weight (e.g., NW_{0AX}) associated with the particular datapath. The network weight (e.g., NW_{0AX}), in turn is a function of a set of network weights associated with each connection link that define the particular datapath.

For example, to calculate the network weight NW_{0AX}, a load balancer, SD-WAN controller, or SD-WAN edge FE determines the communication links used in the datapath to the SD-WAN node 731 and calculates a network weight (e.g., NW_{0A} and NW_{AX}) for each path based on link state data received regarding the connection links that make up the datapath. In some embodiments, the link state data is used directly to calculate the network weight NW_{0AX} instead of calculating intermediate network weights. In some embodiments, the weight is also affected by the number of possible paths such that a capacity of a destination machine (e.g., set of servers) reflected in the weight value also reflects the fact that the same set of servers is identified by multiple destination machines defined by datapaths.

Under either approach, the use of network characteristics (e.g., link state data) that would otherwise be unavailable to the load balancer allows the load balancer to make better decisions than could be made without the network information. For instance, a load balancing operation based on a least connection method (e.g., based on the assumption that it has the most capacity) without network information may identify a destination machine that is connected by a connection link (or set of connection links) that is not reliable or has lower capacity than the destination machine. In such a situation, the real utilization of the available resources is higher than that reflected by the number of connections, and without network information would be identified as having a higher capacity than a different destination machine that has more capacity when the network information is taken into account. Accordingly, reliability, speed, and QoE of the links between a load balancer and a destination machine can be considered when making a load balancing decision.

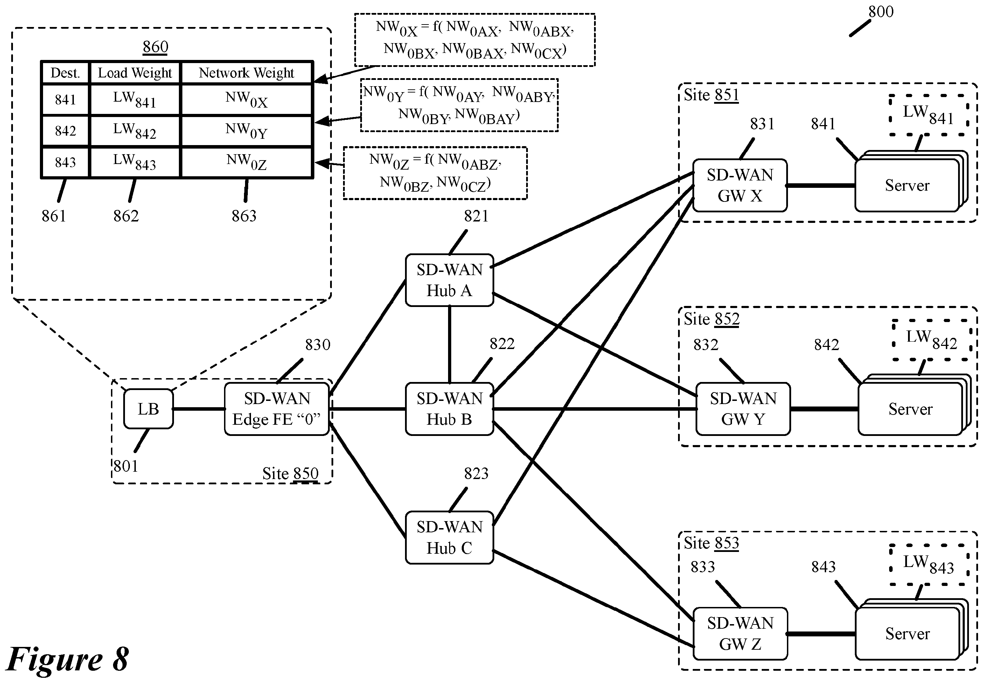

**Figure 8** illustrates a network 800 in which a load balancing device 801 uses a load weight 862 and a network weight 863 associated with each of a set of destination machines 861 (e.g., server clusters 841-843) located at multiple SD-WAN sites to select a destination machine for each received data message. The network 800 includes four edge nodes 830-833 associated with four SD-WAN sites 850-853. In the illustrated embodiment the SD-WAN forwarding nodes 831-833 serve as frontend devices for the backend servers 841-843, respectively, and are identified as the destination machines. Each set of servers 841-843 is associated with a load weight LW₈₄₁- LW₈₄₃ which in some embodiments represents a set of load data (e.g., CPU load, memory load, session load, etc.) provided to, or maintained at, the load balancer 801.

The network 800 also includes a set of SD-WAN hubs 821-823 that facilitate connections between SD-WAN edge devices in some embodiments. As in **Figure 7****,** SD-WAN hubs 821-823, in some embodiments, execute in different physical locations (e.g., different datacenters) while in other embodiments two or more of SD-WAN hubs 821-823 are in a single hub cluster at a particular physical location (e.g., an enterprise datacenter). SD-WAN hubs 821-823, in the illustrated embodiment, serve as interconnecting hubs for the connections between the SD-WAN edge devices 830-833.

The load balancer 801 receives the load balancing data 860 (i.e., load weights LW₈₄₁-LW₈₄₃) and link state data (e.g., network weights (NW)) for the connection links between the SD-WAN elements. The load balancing information 860 defines destination machines using the edge nodes 831-833 (representing the sets of servers 841-843) such that a particular edge node (e.g., the edge node 831 associated with server set 841) is selected. Specifically, the load balancer 801 uses both the load balancing data and link state data as weight values for performing its selection of the different server sets as the different destinations for the different data message flows.

In some embodiments, the load balancer 801 produces an aggregate weight from both of the network and load weights NW and LW associated with a server set, and then uses the aggregated weights to select a server set among the server sets for a data message flow. In other embodiments, it does not generate aggregate weight from the network and load weights but uses another approach (e.g., uses the network weights as constraints to eliminate one or more of the server sets when the SD-WAN connections to the server sets are unreliable).

The link state data, as described above in relation to **Figures 4 and 5****,** is either a set of network weights or is used to calculate the set of network weights used by the load balancer. In some embodiments, load balancing information 860 associates the destination machines with a single network weight NW calculated for the set of datapaths available to reach the edge node. In some embodiments, the network weight for a particular SD-WAN forwarding node 831, 832 or 833 is a function of the network weights associated with each path from the SD-WAN forwarding node 830 to the particular SD-WAN forwarding node 831, 832 or 833, as illustrated by the equations in **Figure 8****,** and as described above by reference to **Figure 7****.** The selection of a particular edge node for a data message is performed, in some embodiments, as described in relation to **Figure 6** for embodiments that select among edge nodes or destination machines instead of datapaths.

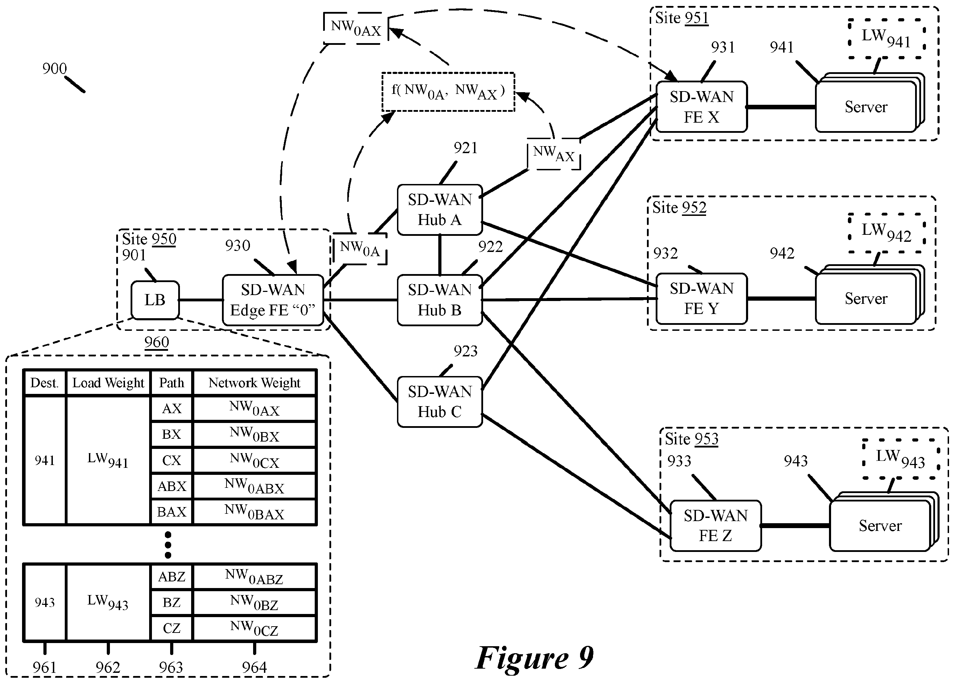

**Figure** 9 illustrates a network 900 in which a load balancing device 901 uses a load weight 962 and a network weight 964 associated with each of a set of datapaths 963 (e.g., AX, BX, etc.) to a set of edge forwarding nodes of the SD-WAN to select a particular datapath to a particular edge node for each received data message. This network 900 includes four edge forwarding nodes 930-933 associated with four SD-WAN sites 950-953. In the illustrated embodiment, the SD-WAN FEs 931-933 serve as frontend load-balancing devices for the backend servers 941-943, respectively, and are identified as the destination machines. Each set of servers 931-933 is associated with a load weight LW₉₄₁- LW₉₄₃, which in some embodiments represents a set of load data (e.g., CPU load, memory load, session load, etc.) provided to, or maintained at, the load balancer.

The network 900 also includes a set of SD-WAN hubs 921-923 that facilitate connections between SD-WAN edge devices in some embodiments. As in **Figure 7****,** SD-WAN hubs 921-923, in some embodiments, execute in different physical locations (e.g., different datacenters) while in other embodiments some or all of the SD-WAN hubs 921-923 are in a single hub cluster at a particular physical location (e.g., an enterprise datacenter). SD-WAN hubs 921-923, in the illustrated embodiment, provide connections between the SD-WAN edge devices 930-933.

The load balancer 901 receives the load balancing data 960 (i.e., load weights LW₉₄₁-LW₉₄₃) and link state data (e.g., network weights (NW)) for the connection links between the SD-WAN elements. The link state data, as described above in relation to **Figures 4 and 5****,** is either a set of network weights or is a set of attributes used to calculate the set of network weights used by the load balancer. As for load balancing information 960, load balancing information 960 has a destination machine identifier 961 (which in some embodiments identifies one of the edge nodes 931-933) to represent the server sets 941-943, and associates each destination with a load weight 962.

Additionally, load balancing information 960 identifies each datapath 963 to an edge node and stores a network weight 964 for each datapath 963. The network weight of each datapath, in some embodiments, is received as link state data, while in other embodiments the link state data is connection link attribute data (e.g., an intermediate network weight, or measures of connection link attributes) that is used to calculate the network weight for each datapath.

Based on the load weight 962, the load balancer 901 initially performs a first-load balancing operation to select (e.g., through a round robin selection that is based on the load weight) a particular candidate edge node from a set of candidate edge nodes. To do this, the load balancer in some embodiments performs an operation similar to operation 620 of **Figure 6****.** Based on the network weight, the load balancing operation then performs a second load-balancing operation (similar to operation 630 of **Figure 6****)** to select (e.g., through a round robin selection that is based on the network weight) a particular datapath to a selected particular edge node from one or more candidate datapaths to the particular edge node. By using this two-step load balancing operation, the load balancer 901 can identify candidate destination machines that meet certain criteria and then apply knowledge of the intervening network to select a particular datapath to a candidate destination machine that meets a different set of criteria that take into account a quality of the network connectivity (e.g., meets a minimum QoE metric).

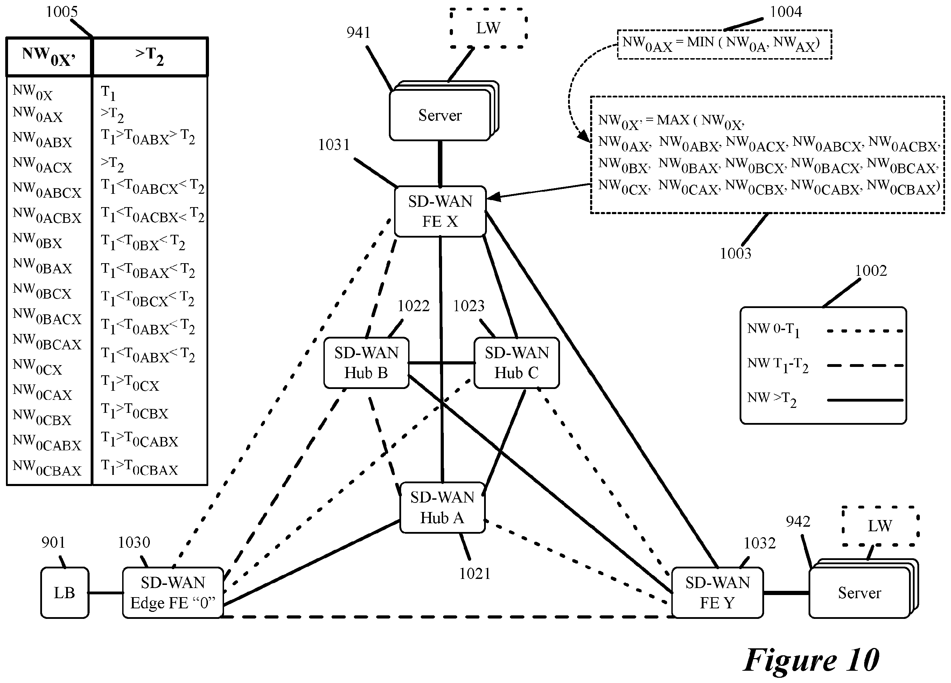

**Figure 10** illustrates a full mesh network among a set of SD-WAN edge nodes 1030-1032 and a set of SD-WAN hubs 1021-1023 connected by connection links of different qualities. In the illustrated embodiment, each connection link is assigned a network weight (e.g., a score) that is then compared to a set of two threshold network weights "T1" and "T2" that, in some embodiments, are user-specified. In other embodiments, the single network weight is replaced by a set of network weights for different attributes that can be used for load balancing different applications that are sensitive to different attributes of the connection links (e.g., flows that place heavier weight on speed (low latency) than on jitter or packet loss). The choice of two threshold values is selected for illustrative purposes and is not to be understood to be limiting.

Exemplary network weight calculations for each individual datapath and for collections of datapaths are illustrated using table 1002 which provides a legend identifying network weights of each connection link and equations 1003 and 1004. Equations 1003 and 1004 represent a simple min or max equation that identifies the network weight associated with the weakest connection link in a datapath as the network weight for the individual datapath and the network weight associated with the datapath with the highest network weight in a set of datapaths as the network weight for the set of datapaths between a source and a destination.

Using the minimum value for a particular datapath reflects the fact that for a particular datapath defined as traversing a particular set of connection links, the worst (e.g., slowest, most lossy, etc.) connection link will limit the connectivity along the datapath. In contrast, for a set of datapaths, the best datapath can be selected such that the best datapath defines the connectivity of the source and destination. For specific characteristics, such as a loss rate, a multiplicative formula, in some embodiments, will better reflect the loss rate (e.g., a number of data messages received divided by the total number of data messages sent). One of ordinary skill in the art will appreciate that the functions can be defined in many ways based on the number of different characteristics or attributes being considered and how they interact.

The results of equations 1003 and 1004 are illustrated in table 1005 identifying each individual datapath from SD-WAN Edge FE 1030 to SD-WAN FE 1031 (e.g., gateway "X"). Similar equations can be used to identify a network weight for datapaths (and the set of datapaths) from SD-WAN Edge FE 1030 to SD-WAN FE 1032 (e.g., gateway "Y"). As discussed above, some embodiments use the network weights for the individual datapaths to make load balancing decisions, while some embodiments use the network weight for the set of datapaths connecting a source and destination. However, one of ordinary skill in the art will appreciate that more complicated formulas that take into account the number of hops, or the individual characteristics that were used to calculate the network weight for each connection link, are used to compute a network weight or other value associated with each datapath or destination.

In the examples illustrated in **Figures 2****,** **3****,** and **7****-10,** each edge forwarding node is said to perform the load balancing operations to select one destination machine from a set of destination machines associated with the edge forwarding node. In some embodiments, the edge forwarding node performs the load balancing operations by executing a load-balancing process. In other embodiments, the edge forwarding node directs a load balancer or set of load balancers that are co-located with the edge forwarding node at an SD-WAN site to perform the load-balancing operations for new data message flows that the edge forwarding node receives, and then forwards the data message flows to the destination machines selected by the load balancer(s). In still other embodiments, the edge forwarding node simply forwards the data message flows to a load balancer operating in the same SD-WAN site, and this load balancer selects the destination machines for each data message flow and forwards each flow to the destination machine that the load balancer selects.

**Figure 11** illustrates a GSLB system 1100 that uses the network-aware load balancing of some embodiments. In this example, backend application servers 1105a-d are deployed in four datacenters 1102-1108: three of which are private datacenters 1102-1106 and one of which is a public datacenter 1108. The datacenters 1102-1108 in this example are in different geographical sites (e.g., different neighborhoods, different cities, different states, different countries, etc.).

A cluster of one or more controllers 1110 are deployed in each datacenter 1102-1108. Each datacenter 1102-1108 also has a cluster 1115 of load balancers 1117 to distribute the data message load across the backend application servers 1105 in the datacenter. In this example, three datacenters 1102, 1104, and 1108 also have a cluster 1120 of DNS service engines 1125 to perform DNS operations to process (e.g., to provide network addresses for a domain name) for DNS requests submitted by machines 1130 inside or outside of the datacenters. In some embodiments, the DNS requests include requests for fully qualified domain name (FQDN) address resolutions.

**Figure 11** illustrates the resolution of an FQDN that refers to a particular application "A" that is executed by the servers of the domain acme.com. As shown, this application is accessed through https and the URL "A.acme.com." The DNS request for this application is resolved in three steps. First, a public DNS resolver 1160 initially receives the DNS request and forwards this request to the private DNS resolver 1165 of the enterprise that owns or manages the private datacenters 1102-1106.

Second, the private DNS resolver 1165 selects one of the DNS clusters 1120. This selection is based on a set of load balancing criteria that distributes the DNS request load across the DNS clusters 1120. In the example illustrated in Figure 11, the private DNS resolver 1165 selects the DNS cluster 1120b of the datacenter 1104.

Third, the selected DNS cluster 1120b resolves the domain name to an IP address. In some embodiments, each DNS cluster 1120 includes multiple DNS service engines 1125, such as DNS service virtual machines (SVMs) that execute on host computers in the cluster's datacenter. When a DNS cluster 1120 receives a DNS request, a frontend load balancer (not shown) in some embodiments selects a DNS service engine 1125 in the cluster 1120 to respond to the DNS request, and forwards the DNS request to the selected DNS service engine 1125. Other embodiments do not use a frontend load balancer, and instead have a DNS service engine 1125 serve as a frontend load balancer that selects itself or another DNS service engine 1125 in the same cluster 1120 for processing the DNS request.

The DNS service engine 1125b that processes the DNS request then uses a set of criteria to select one of the backend server clusters 1105 for processing data message flows from the machine 1130 that sent the DNS request. The set of criteria for this selection in some embodiments includes at least one of (1) load weights identifying some measure of load on each backend cluster 1105, (2) a set of network weights as described above reflecting a measure of connectivity, and (3) a set of health metrics as further described in US. Patent Application 16/746,785 filed on January 17, 2020. Also, in some embodiments, the set of criteria include load balancing criteria that the DNS service engines use to distribute the data message load on backend servers that execute application "A."

In the example illustrated in Figure 11, the selected backend server cluster is the server cluster 1105c in the private datacenter 1106. After selecting this backend server cluster 1105c for the DNS request that it receives, the DNS service engine 1125b of the DNS cluster 1120b returns a response to the requesting machine. As shown, this response includes the VIP address associated with the selected backend server cluster 1105c. In some embodiments, this VIP address is
associated with the local load balancer cluster 1115c that is in the same datacenter 1106 as the selected backend server cluster.

After getting the VIP address, the machine 1130 sends one or more data message flows to the VIP address for a backend server cluster 1105 to process. In this example, the data message flows are received by the local load balancer cluster 1115c. In some embodiments, each load balancer cluster 1115 has multiple load balancing engines 1117 (e.g., load balancing SVMs) that execute on host computers in the cluster's datacenter.

When the load balancer cluster receives the first data message of the flow, a frontend load balancer (not shown) in some embodiments selects a load balancing service engine 1117 in the cluster 1115 to select a backend server 1105 to receive the data message flow, and forwards the data message to the selected load balancing service engine 1117. Other embodiments do not use a frontend load balancer, and instead have a load balancing service engine in the cluster serve as a frontend load balancer that selects itself or another load balancing service engine in the same cluster for processing the received data message flow.

When a selected load balancing service engine 1117 processes the first data message of the flow, this service engine 1117 uses a set of load balancing criteria (e.g., a set of weight values) to select one backend server from the cluster of backend servers 1105c in the same datacenter 1106. The load balancing service engine 1117 then replaces the VIP address with an actual destination IP (DIP) address of the selected backend server 1105c, and forwards the data message and subsequent data messages of the same flow to the selected back end server 1105c. The selected backend server 1105c then processes the data message flow, and when necessary, sends a responsive data message flow to the machine 1130. In some embodiments, the responsive data message flow is through the load balancing service engine 1117 that selected the backend server 1105c for the initial data message flow from the machine 1130.

**Figure 12** illustrates an embodiment including a network-aware GSLB system 1200 deployed in an SD-WAN using network-aware load balancing. The system 1200 includes a set of four datacenters 1202-1208, three of which are private datacenters 1202-1206 and one of which is a public datacenter 1208 as in **Figure** 11. The set of four datacenters 1202-1208 are part of the SD-WAN, and each hosts an SD-WAN edge device 1245 (e.g., a multi-tenant SD-WAN edge FE, gateway or hub) that facilitates communications within the SD-WAN. The four datacenters 1202-1208, in this embodiment, are connected by a set of hubs 1250a-b in datacenters 1275a-b (e.g., a private or public datacenter) that facilitate communication between external or internal machines 1230a-b and the backend servers 1205. As shown, external machine 1230a connects to the hubs 1250a-b through the internet 1270, and the hubs 1250a-b may also serve as gateways for access to external networks or machines.

As in **Figure 3****,** the SD-WAN controller cluster 1240 sends link state data (LSD) to other load balancing elements of the SD-WAN. In system 1200, the controller cluster 1240 generates (1) link state data (e.g., DNS-LSD 1241) for load balancing among the DNS servers and (2) link state data (e.g., APP-LSD 1242) for load balancing among the applications (i.e., the sets of backend servers 1205). The DNS-LSD 1241 is provided to the private DNS resolver 1265 to be used to perform the first level of load balancing among the DNS servers in the different data servers based on load weights and the link state data (or data derived from the link state data) and a set of load balancing criteria similarly to the process for selecting a destination machine described above in relation to **Figures 6-10****.** The APP-LSD 1242 is provided to the DNS service engines 1225a-d to perform the second level of load balancing among the backend server clusters 1205a-d based on load balancing criteria or load weights and the link state data (or data derived from the link state data) and a set of load balancing criteria, similarly to the process for selecting a destination machine described above in relation to **Figures 6-10****.** In the illustrated embodiment, the load balancer clusters 1115a-d are not provided with any link state data as connections within a datacenter are not usually subject to the same variations in connectivity as connection links between datacenters.

Many of the above-described features and applications are implemented as software processes that are specified as a set of instructions recorded on a computer-readable storage medium (also referred to as computer-readable medium). When these instructions are executed by one or more processing unit(s) (e.g., one or more processors, cores of processors, or other processing units), they cause the processing unit(s) to perform the actions indicated in the instructions. Examples of computer-readable media include, but are not limited to, CD-ROMs, flash drives, RAM chips, hard drives, EPROMs, etc. The computer-readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the invention. In some embodiments, the software programs, when installed to operate on one or more electronic systems, define one or more specific machine implementations that execute and perform the operations of the software programs.

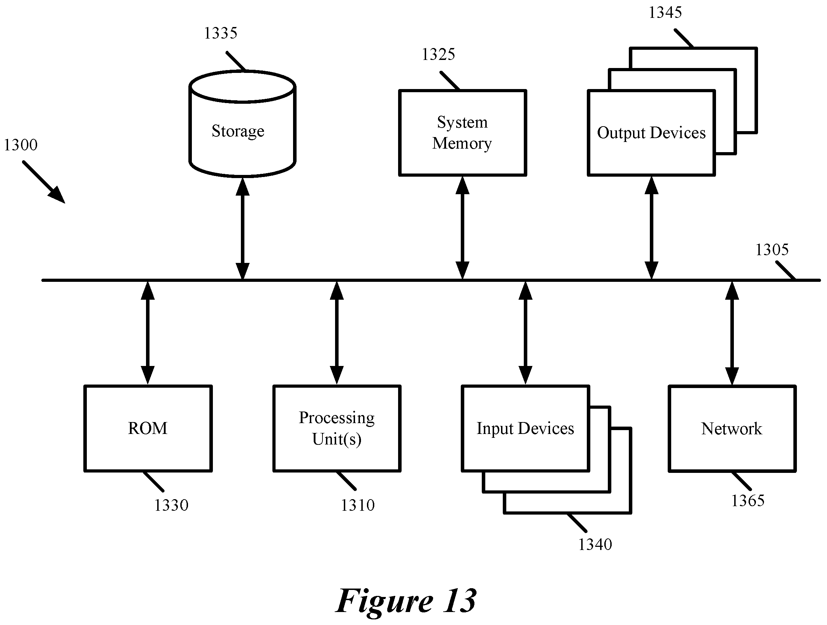

**Figure 13** conceptually illustrates a computer system 1300 with which some embodiments of the invention are implemented. The computer system 1300 can be used to implement any of the above-described hosts, controllers, gateway and edge forwarding elements. As such, it can be used to execute any of the above-described processes. This computer system 1300 includes various types of non-transitory machine-readable media and interfaces for various other types of machine-readable media. Computer system 1300 includes a bus 1305, processing unit(s) 1310, a system memory 1325, a read-only memory 1330, a permanent storage device 1335, input devices 1340, and output devices 1345.

The bus 1305 collectively represents all system, peripheral, and chipset buses that communicatively connect the numerous internal devices of the computer system 1300. For instance, the bus 1305 communicatively connects the processing unit(s) 1310 with the read-only memory 1330, the system memory 1325, and the permanent storage device 1335.

From these various memory units, the processing unit(s) 1310 retrieve instructions to execute and data to process in order to execute the processes of the invention. The processing unit(s) may be a single processor or a multi-core processor in different embodiments. The read-only-memory (ROM) 1330 stores static data and instructions that are needed by the processing unit(s) 1310 and other modules of the computer system. The permanent storage device 1335, on the other hand, is a read-and-write memory device. This device is a non-volatile memory unit that stores instructions and data even when the computer system 1300 is off. Some embodiments of the invention use a mass-storage device (such as a magnetic or optical disk and its corresponding disk drive) as the permanent storage device 1335.

Other embodiments use a removable storage device (such as a floppy disk, flash drive, etc.) as the permanent storage device 1335. Like the permanent storage device 1335, the system memory 1325 is a read-and-write memory device. However, unlike storage device 1335, the system memory 1325 is a volatile read-and-write memory, such as random access memory. The system memory 1325 stores some of the instructions and data that the processor needs at runtime. In some embodiments, the invention's processes are stored in the system memory 1325, the permanent storage device 1335, and/or the read-only memory 1330. From these various memory units, the processing unit(s) 1310 retrieve instructions to execute and data to process in order to execute the processes of some embodiments.

The bus 1305 also connects to the input and output devices 1340 and 1345. The input devices 1340 enable the user to communicate information and select commands to the computer system 1300. The input devices 1340 include alphanumeric keyboards and pointing devices (also called "cursor control devices"). The output devices 1345 display images generated by the computer system 1300. The output devices 1345 include printers and display devices, such as cathode ray tubes (CRT) or liquid crystal displays (LCD). Some embodiments include devices such as touchscreens that function as both input and output devices 1340 and 1345.

Finally, as shown in **Figure 13****,** bus 1305 also couples computer system 1300 to a network 1365 through a network adapter (not shown). In this manner, the computer 1300 can be a part of a network of computers (such as a local area network ("LAN"), a wide area network ("WAN"), or an Intranet), or a network of networks (such as the Internet). Any or all components of computer system 1300 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessors or multi-core processors that execute software, some embodiments are performed by one or more integrated circuits, such as application-specific integrated circuits (ASICs) or field-programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms "display" or "displaying" mean displaying on an electronic device. As used in this specification, the terms "computer-readable medium," "computer-readable media," and "machine-readable medium" are entirely restricted to tangible, physical objects that store information in a form that is readable by a computer. These terms exclude any wireless signals, wired download signals, and any other ephemeral or transitory signals.

While the invention has been described with reference to numerous specific details, one of ordinary skill in the art will recognize that the invention can be embodied in other specific forms. For instance, several of the above-described embodiments deploy gateways in public cloud datacenters. However, in other embodiments, the gateways are deployed in a third-party's private cloud datacenters (e.g., datacenters that the third-party uses to deploy cloud gateways for different entities in order to deploy virtual networks for these entities). Thus, one of ordinary skill in the art would understand that the invention is not to be limited by the foregoing illustrative details, but rather is to be defined by the appended claims.

## Claims

1. A method of providing network-aware load balancing for data messages traversing a software-defined wide area network, SD-WAN, (100) comprising a plurality of connection links (115) between different elements of the SD-WAN (100), the method comprising:
at an SD-WAN controller (250),
receiving data regarding connection link characteristics of a plurality of physical connection links from a plurality of SD-WAN elements (230, 231, 232, 233), wherein at least two SD-WAN elements in the plurality of SD-WAN elements (230, 231, 232, 233) that provide the received data to the SD-WAN controller (250) are at second and third SD-WAN sites (261, 262) respectively and communicate with a first SD-WAN site (205) through one or more links of the plurality of physical connection links;
generating link state data (312) relating to the plurality of physical connection links based on the received data regarding connection link characteristics; and
providing the generated link state data (312) to a load balancer (201) of the first SD-WAN site (205), wherein the load balancer (201) generates load balancing criteria based on the generated link state data (312) and, based on the generated load balancing criteria, distributes flows among the plurality of physical connection links, said flows being addressed to a common destination,
wherein providing the link state data (312) to the load balancer (201) comprises providing the link state data to an SD-WAN edge device (230) of the first SD-WAN site (205) that provides the link state data to the load balancer, wherein the link state data is modified by the SD-WAN edge device of the first SD-WAN site to generate link state data for consumption by the load balancer.

2. The method of claim 1, wherein generating link state data (312) relating to the plurality of physical connection links comprises:
identifying a set of datapaths (963) connecting the load balancer (201) to each destination machine in a set of destination machines (241, 242, 243), each datapath comprising an ordered set of connection links; and
generating link state data for each datapath based on the received data regarding connection link characteristics.

3. The method of claim 2, wherein the link state data (312) comprises one of (i) a current measure of latency for each datapath in the set of datapaths (963) or (ii) a historical measure of latency for each datapath in the set of datapaths.

4. The method of claim 2, wherein the link state data (312) comprises a measure of latency for each SD-WAN connection link that is included in any datapath in the set of datapaths (963), and a measure of latency for a particular datapath is calculated based on the received measures of latency for each SD-WAN connection link that makes up the datapath, wherein the measure of latency for the particular datapath is a maximum latency of any communication link included in the datapath.

5. The method of claim 2, wherein the link state data based on the received data regarding connection link characteristics comprises one of (i) a current measure of data message loss for each datapath in the set of datapaths (963) or (ii) a historical measure of data message loss for each data path in the set of datapaths.

6. The method of claim 5, wherein:
the current measure of data message loss comprises a loss rate expressed as a number between 0 and 1 that reflects a number of data messages sent across the datapath that reach their destination,
the data regarding connection link characteristics comprises a loss rate for each SD-WAN connection link that is included in any datapath in the set of datapaths (963); and
the current measure of data message loss for a datapath in the set of datapaths is based on multiplying a loss rate for each SD-WAN connection link that is included in the datapath in the set of datapaths.

7. The method of claim 2, wherein the link state data based on the received data regarding connection link characteristics comprises one of (i) a current measure of jitter for each datapath in the set of datapaths (963) or (ii) a historical measure of jitter for each datapath in the set of datapaths.

8. The method of claim 2, wherein the link state data based on the received data regarding connection link characteristics comprises one of (i) a current measure of quality of experience score for each datapath in the set of datapaths (963) based on at least one of a current measure of latency, a current measure of data message loss, and a current measure of jitter for the datapath or (2) a historical measure of quality of experience score for each datapath in the set of datapaths based on at least one of a historical measure of latency, a historical measure of data message loss, and a historical measure of jitter for the datapath.

9. The method of claim 1 further comprising:
receiving a set of load data for destination machines in a set of destination machines, wherein generating the link state data (312) is further based on the received load data, and the link state data comprises a set of weights for the load balancer to use to provide the load balancing.

10. The method of claim 9, wherein the set of weights comprises a single weight for each destination machine (241, 242, 243) based on the load data and the link state data.

11. The method of claim 9, wherein the link state data comprises, for each destination machine (241, 242, 243), (1) a first load weight indicating at least one of a CPU load, a memory load, and a session load based on the received load data and (2) a second network weight associated with a set of connection links connecting the load balancer to the destination machine based on the received connection link characteristic data.

12. The method of claim 2, wherein a plurality of datapaths (963) connecting the load balancer to the set of destination machines (241, 242, 243) is identified and the link state data (312) comprises, for each datapath, (1) a first load weight indicating at least one of a CPU load, a memory load, and a session load on the associated destination machine based on the received load data and (2) a second network weight associated with a set of connection links making up the datapath based on the received connection link characteristic data.

13. An electronic device comprising:
a set of processing units; and
a machine readable medium storing a program which when implemented by at least one of the processing units implements the method according to any one of claims1-12.

14. A system comprising means for implementing the method according to any one of claims 1-12.

## Patentansprüche

1. Ein Verfahren zum Bereitstellen eines netzwerkbewussten Lastausgleichs für Datennachrichten, die ein softwaredefiniertes Weitverkehrsnetzwerk, SD-WAN, (100) durchqueren, aufweisend eine Mehrzahl von Verbindungs-Links (115) zwischen verschiedenen Elementen des SD-WAN (100), wobei das Verfahren aufweist:
an einem SD-WAN-Controller (250),
Empfangen von Daten bezüglich Verbindungs-Link-Charakteristiken einer Mehrzahl von physischen Verbindungs-Links von einer Mehrzahl von SD-WAN-Elementen (230, 231, 232, 233), wobei zumindest zwei SD-WAN-Elemente in der Mehrzahl von SD-WAN-Elementen (230, 231, 232, 233), die die empfangenen Daten an den SD-WAN-Controller (250) bereitstellen, an zweiten bzw. dritten SD-WAN-Standorten (261, 262) sind und mit einem ersten SD-WAN-Standort (205) durch einen oder mehrere Links der Mehrzahl von physischen Verbindungs-Links kommunizieren;
Erzeugen von Link-Zustandsdaten (312), die sich auf die Mehrzahl von physischen Verbindungs-Links beziehen, basierend auf den empfangenen Daten bezüglich Verbindungs-Link-Charakteristiken; und
Bereitstellen der erzeugten Link-Zustandsdaten (312) an einen Lastausgleicher (201) des ersten SD-WAN-Standorts (205), wobei der Lastausgleicher (201) Lastausgleichkriterien basierend auf den erzeugten Link-Zustandsdaten (312) erzeugt und basierend auf den erzeugten Lastausgleichkriterien Flüsse unter der Mehrzahl von physischen Verbindungs-Links verteilt, wobei die Flüsse an ein gemeinsames Ziel adressiert sind,
wobei das Bereitstellen der Link-Zustandsdaten (312) an den Lastausgleicher (201) das Bereitstellen der Link-Zustandsdaten an eine SD-WAN-Edge-Vorrichtung (230) des ersten SD-WAN-Standorts (205) aufweist, die die Link-Zustandsdaten an den Lastausgleicher bereitstellt, wobei die Link-Zustandsdaten durch die SD-WAN-Edge-Vorrichtung des ersten SD-WAN-Standorts modifiziert werden, um Link-Zustandsdaten zum Verbrauch durch den Lastausgleicher zu erzeugen.

2. Das Verfahren gemäß Anspruch 1, wobei das Erzeugen von Link-Zustandsdaten (312), die sich auf die Mehrzahl von physischen Verbindungs-Links beziehen, aufweist:
Identifizieren eines Satzes von Datenpfaden (963), die den Lastausgleicher (201) mit jeder Zielmaschine in einem Satz von Zielmaschinen (241, 242, 243) verbinden, wobei jeder Datenpfad einen geordneten Satz von Verbindungs-Links aufweist; und
Erzeugen von Link-Zustandsdaten für jeden Datenpfad basierend auf den empfangenen Daten bezüglich Verbindungs-Link-Charakteristiken.

3. Das Verfahren gemäß Anspruch 2, wobei die Link-Zustandsdaten (312) eines aufweisen von (i) einem aktuellen Latenz-Messwert für jeden Datenpfad in dem Satz von Datenpfaden (963) oder (ii) einem historischen Latenz-Messwert für jeden Datenpfad in dem Satz von Datenpfaden.

4. Das Verfahren gemäß Anspruch 2, wobei die Link-Zustandsdaten (312) einen Latenz-Messwert für jeden SD-WAN-Verbindungs-Link aufweisen, der in irgendeinem Datenpfad in dem Satz von Datenpfaden (963) enthalten ist, und ein Latenz-Messwert für einen bestimmten Datenpfad basierend auf den empfangenen Latenz-Messwerten für jeden SD-WAN-Verbindungs-Link berechnet wird, der den Datenpfad bildet, wobei der Latenz-Messwert für den bestimmten Datenpfad eine maximale Latenz irgendeines Kommunikations-Links ist, der in dem Datenpfad enthalten ist.

5. Das Verfahren gemäß Anspruch 2, wobei die Link-Zustandsdaten basierend auf den empfangenen Daten bezüglich Verbindungs-Link-Charakteristiken eines aufweisen von (i) einem aktuellen Messwert von Datennachrichtenverlust für jeden Datenpfad in dem Satz von Datenpfaden (963) oder (ii) einem historischen Messwert von Datennachrichtenverlust für jeden Datenpfad in dem Satz von Datenpfaden.

6. Das Verfahren gemäß Anspruch 5, wobei:
der aktuelle Messwert von Datennachrichtenverlust eine Verlustrate aufweist, die als eine Zahl zwischen 0 und 1 ausgedrückt wird, die eine Anzahl von Datennachrichten widerspiegelt, die über den Datenpfad gesendet werden, der ihr Ziel erreicht,
die Daten bezüglich Verbindungs-Link-Charakteristiken eine Verlustrate für jeden SD-WAN-Verbindungs-Link aufweisen, der in irgendeinem Datenpfad in dem Satz von Datenpfaden (963) enthalten ist; und
der aktuelle Messwert von Datennachrichtenverlust für einen Datenpfad in dem Satz von Datenpfaden auf Multiplizieren einer Verlustrate für jeden SD-WAN-Verbindungs-Link basiert, der in dem Datenpfad in dem Satz von Datenpfaden enthalten ist.

7. Das Verfahren gemäß Anspruch 2, wobei die Link-Zustandsdaten basierend auf den empfangenen Daten bezüglich Verbindungs-Link-Charakteristiken eines aufweisen von (i) einem aktuellen Messwert von Jitter für jeden Datenpfad in dem Satz von Datenpfaden (963) oder (ii) einem historischen Messwert von Jitter für jeden Datenpfad in dem Satz von Datenpfaden.

8. Das Verfahren gemäß Anspruch 2, wobei die Link-Zustandsdaten basierend auf den empfangenen Daten bezüglich Verbindungs-Link-Charakteristiken eines aufweisen von (i) einem aktuellen Messwert von Erfahrungsqualität-Score für jeden Datenpfad in dem Satz von Datenpfaden (963) basierend auf zumindest einem von einem aktuellen Latenz-Messwert, einem aktuellen Messwert von Datennachrichtenverlust und einem aktuellen Messwert von Jitter für den Datenpfad oder (2) einem historischen Messwert von Erfahrungsqualität-Score für jeden Datenpfad in dem Satz von Datenpfaden basierend auf zumindest einem von einem historischen Latenz-Messwert, einem historischen Messwert von Datennachrichtenverlust und einem historischen Messwert von Jitter für den Datenpfad.

9. Das Verfahren gemäß Anspruch 1, ferner aufweisend:
Empfangen eines Satzes von Lastdaten für Zielmaschinen in einem Satz von Zielmaschinen, wobei das Erzeugen der Link-Zustandsdaten (312) ferner auf den empfangenen Lastdaten basiert und die Link-Zustandsdaten einen Satz von Gewichtungen aufweisen, die der Lastausgleicher verwenden soll, um den Lastausgleich bereitzustellen.

10. Das Verfahren gemäß Anspruch 9, wobei der Satz von Gewichtungen eine einzelne Gewichtung für jede Zielmaschine (241, 242, 243) basierend auf den Lastdaten und den Link-Zustandsdaten aufweist.

11. Das Verfahren gemäß Anspruch 9, wobei die Link-Zustandsdaten für jede Zielmaschine (241, 242, 243) aufweisen (1) eine erste Lastgewichtung, die zumindest eines von einer CPU-Last, einer Speicherlast und einer Sitzungslast basierend auf den empfangenen Lastdaten anzeigt, und (2) eine zweite Netzwerkgewichtung, die mit einem Satz von Verbindungs-Links assoziiert ist, die den Lastausgleicher mit der Zielmaschine basierend auf den empfangenen Verbindungs-Link-Charakteristikdaten verbinden.

12. Das Verfahren gemäß Anspruch 2, wobei eine Mehrzahl von Datenpfaden (963), die den Lastausgleicher mit dem Satz von Zielmaschinen (241, 242, 243) verbinden, identifiziert wird und die Link-Zustandsdaten (312) für jeden Datenpfad aufweisen (1) eine erste Lastgewichtung, die zumindest eines von einer CPU-Last, einer Speicherlast und einer Sitzungslast auf der assoziierten Zielmaschine basierend auf den empfangenen Lastdaten anzeigt, und (2) eine zweite Netzwerkgewichtung, die mit einem Satz von Verbindungs-Links assoziiert ist, die den Datenpfad basierend auf den empfangenen Verbindungs-Link-Charakteristikdaten bilden.

13. Eine elektronische Vorrichtung, aufweisend:
einen Satz von Verarbeitungseinheiten; und
ein maschinenlesbares Medium, das ein Programm speichert, das, wenn es durch zumindest eine der Verarbeitungseinheiten implementiert wird, das Verfahren gemäß einem der Ansprüche 1 bis 12 implementiert.

14. Ein System, aufweisend Mittel zum Implementieren des Verfahrens gemäß einem der Ansprüche 1 bis 12.

## Revendications

1. Procédé pour fournir un équilibrage de charge sensible au réseau pour des messages de données traversant un réseau étendu défini par logiciel, SD-WAN, (100) comprenant une pluralité de liaisons de connexion (115) entre différents éléments du SD-WAN (100), le procédé comprenant :
au niveau d'un dispositif de commande de SD-WAN (250),
recevant des données concernant des caractéristiques de liaison de connexion d'une pluralité de liaisons de connexion physiques à partir d'une pluralité d'éléments de SD-WAN (230, 231, 232, 233), dans lequel au moins deux éléments de SD-WAN dans la pluralité d'éléments de SD-WAN (230, 231, 232, 233) qui fournissent les données reçues au dispositif de commande de SD-WAN (250) sont respectivement au niveau de deuxième et troisième sites de SD-WAN (261, 262) et communiquent avec un premier site de SD-WAN (205) par l'intermédiaire d'une ou plusieurs liaisons de la pluralité de liaisons de connexion physiques ;
générer des données d'état de liaison (312) relatives à la pluralité de liaisons de connexion physiques sur la base des données reçues concernant les caractéristiques de liaison de connexion ; et
fournir les données d'état de liaison générées (312) à un répartiteur de charge (201) du premier site de SD-WAN (205), dans lequel le répartiteur de charge (201) génère des critères d'équilibrage de charge sur la base des données d'état de liaison générées (312) et, sur la base des critères d'équilibrage de charge générés, distribue des flux parmi la pluralité de liaisons de connexion physiques, lesdits flux étant adressés à une destination commune,
dans lequel la fourniture des données d'état de liaison (31.2) au dispositif d'équilibrage de charge (201) comprend une fourniture des données d'état de liaison à un dispositif périphérique de SD-WAN (230) du premier site de SD-WAN (205) qui fournit les données d'état de liaison au dispositif d'équilibrage de charge, dans lequel les données d'état de liaison sont modifiées par le dispositif périphérique de SD-WAN du premier site de SD-WAN pour générer des données d'état de liaison destinées à être consommées par le dispositif d'équilibrage de charge.

2. Procédé selon la revendication 1, dans lequel la génération de données d'état de liaison (312) relatives à la pluralité de liaisons de connexion physiques comprend les étapes consistant à :
identifier un ensemble de trajets de données (963) connectant le dispositif d'équilibrage de charge (201) à chaque machine de destination dans un ensemble de machines de destination (241, 242, 243), chaque trajet de données comprenant un ensemble ordonné de liaisons de connexion ; et
générer des données d'état de liaison pour chaque trajet de données sur la base des données reçues concernant les caractéristiques de liaison de connexion.

3. Procédé selon la revendication 2, dans lequel les données d'état de liaison (312) comprennent une certaine parmi (i) une mesure actuelle de latence pour chaque trajet de données dans l'ensemble de trajets de données (963) ou (ii) une mesure historique de latence pour chaque trajet de données dans l'ensemble de trajets de données.

4. Procédé selon la revendication 2, dans lequel les données d'état de liaison (312) comprennent une mesure de latence pour chaque liaison de connexion de SD-WAN qui est incluse dans tout trajet de données dans l'ensemble de trajets de données (963), et une mesure de latence pour un trajet de données particulier est calculée sur la base des mesures de latence reçues pour chaque liaison de connexion de SD-WAN qui constitue le trajet de données, dans lequel la mesure de latence pour le trajet de données particulier est une latence maximale de toute liaison de communication incluse dans le trajet de données.

5. Procédé selon la revendication 2, dans lequel les données d'état de liaison basées sur les données reçues concernant des caractéristiques de liaison de connexion comprennent une certaine parmi (i) une mesure actuelle de perte de message de données pour chaque trajet de données dans l'ensemble de trajets de données (963) ou (ii) une mesure historique de perte de message de données pour chaque trajet de données dans l'ensemble de trajets de données.

6. Procédé selon la revendication 5, dans lequel :
la mesure actuelle de perte de messages de données comprend un taux de perte exprimé sous la forme d'un nombre compris entre 0 et 1 qui reflète un certain nombre de messages de données envoyés sur le trajet de données qui atteignent leur destination,
les données concernant des caractéristiques de liaison de connexion comprennent un taux de perte pour chaque liaison de connexion de SD-WAN qui est incluse dans tout trajet de données dans l'ensemble de trajets de données (963) ; et
la mesure actuelle de perte de messages de données pour un trajet de données dans l'ensemble de trajets de données est basée sur une multiplication d'un taux de perte pour chaque liaison de connexion de SD-WAN qui est incluse dans le trajet de données dans l'ensemble de trajets de données.

7. Procédé selon la revendication 2, dans lequel les données d'état de liaison basées sur les données reçues concernant des caractéristiques de liaison de connexion comprennent une certaine parmi (i) une mesure actuelle de gigue pour chaque trajet de données dans l'ensemble de trajets de données (963) ou (ii) une mesure historique de gigue pour chaque trajet de données dans l'ensemble de trajets de données.

8. Procédé selon la revendication 2, dans lequel les données d'état de liaison basées sur les données reçues concernant les caractéristiques de liaison de connexion comprennent une certaine parmi (i) une mesure actuelle de score de qualité d'expérience pour chaque trajet de données dans l'ensemble de trajets de données (963) sur la base d'au moins une certaine parmi une mesure actuelle de latence, une mesure actuelle de perte de message de données et une mesure actuelle de gigue pour le trajet de données ou (2) une mesure historique de score de qualité d'expérience pour chaque trajet de données dans l'ensemble de trajets de données sur la base d'au moins une certaine parmi une mesure historique de latence, une mesure historique de perte de message de données et une mesure historique de gigue pour le trajet de données.

9. Procédé selon la revendication 1 comprenant en outre l'étape consistant à :
recevoir un ensemble de données de charge pour des machines de destination dans un ensemble de machines de destination, dans lequel la génération des données d'état de liaison (312) est en outre basée sur les données de charge reçues, et les données d'état de liaison comprennent un ensemble de poids que le dispositif d'équilibrage de charge doit utiliser pour fournir l'équilibrage de charge.

10. Procédé selon la revendication 9, dans lequel l'ensemble de poids comprend un poids unique pour chaque machine de destination (241, 242, 243) sur la base des données de charge et des données d'état de liaison.

11. Procédé selon la revendication 9, dans lequel les données d'état de liaison comprennent, pour chaque machine de destination (241, 242, 243), (1) un premier poids de charge indiquant au moins une certaine parmi une charge de CPU, une charge de mémoire et une charge de session sur la base des données de charge reçues et (2) un second poids de réseau associé à un ensemble de liaisons de connexion connectant le dispositif d'équilibrage de charge à la machine de destination sur la base des données de caractéristiques de liaison de connexion reçues.

12. Procédé selon la revendication 2, dans lequel une pluralité de trajets de données (963) connectant le dispositif d'équilibrage de charge à l'ensemble de machines de destination (241, 242, 243) est identifiée et les données d'état de liaison (312) comprennent, pour chaque trajet de données, (1) un premier poids de charge indiquant au moins une parmi une charge de CPU, une charge de mémoire et une charge de session sur la machine de destination associée sur la base des données de charge reçues et (2) un second poids de réseau associé à un ensemble de liaisons de connexion constituant le trajet de données sur la base des données de caractéristiques de liaison de connexion reçues.

13. Dispositif électronique, comprenant :
un ensemble d'unités de traitement ; et
un support lisible par machine stockant un programme qui, lorsqu'il est mis en œuvre par au moins une des unités de traitement, met en œuvre le procédé selon l'une quelconque des revendications 1 à 12.

14. Système comprenant des moyens pour mettre en œuvre le procédé selon l'une quelconque des revendications 1 à 12.
